# EUROPEAN PATENT APPLICATION

(11) **EP 4 600 060 A1**
(43) Date of publication of application: **13.08.2025**
(21) Application number: 24156939.1
(22) Date of filing: 09.02.2024
(51) Int. Cl.: B60J 7/02, B62D 25/06

(54) **ROOF ASSEMBLY FOR A VEHICLE**

(71) Applicant: Inalfa Roof Systems Group B.V., 5807 GW Oostrum (NL)
(72) Inventor: NELLEN, Marcel Johan Christiaan, 5815 AR Merselo (NL)
(74) Representative: De Vries & Metman

(57) **Abstract**

A roof assembly comprises a first bracket (12), in particular a closure member bracket for supporting a closure member (2a), a second bracket (15), in particular a support bracket, the first and second brackets (12, 15) for mounting a closure member (2a) to a roof of the vehicle, and a screw fastener (16) screwable or screwed to the second bracket (15) through an opening (17) in a fastening portion (14) of the first bracket (12) to fasten the first bracket (12) to the second bracket (15). The screw fastener (16) has, along a length, a head (18) and a shank (19) separated by a shaft (20), the shaft (20) has a shaft outer diameter (OD20) being smaller than a major diameter of the shank (MD19), and a shaft length (L20) being larger than a thickness (T14) of the fastening portion (14).

## Description

The present disclosure relates to open-roof systems for a roof of a vehicle. The present disclosure relates in particular to a roof assembly for a vehicle, the roof assembly being for such an open-roof system, and more in particular relating to a mounting assembly for (a roof assembly for) such an open-roof system, and to methods of assembling the mounting assembly and the roof assembly comprising same.

Open-roof systems for vehicles are commonly known. A vehicle roof may be provided with an opening and the open-roof system provides a closure member, e.g. a glass panel. The closure member may be moveably arranged such that in a closed position the closure member covers the opening in the roof, while in an open position the opening is at least partly uncovered.

In the above-mentioned known open-roof assembly, a moveable closure member may be supported by a guide assembly.

The guide assembly supports the closure member and provides for a suitable movement trajectory. In an exemplary known open-roof assembly, a rear end of the closure member is known to be first lifted out of a plane of the vehicle roof to a tilted position and then the closure member may be slide rearward, wherein a frontal end of the closure member may be lifted as well.

The closure member is mounted to a mounting element. The mounting element is supported by the guide assembly. In particular, the mounting element is fixed to a support element of the guide assembly controlling the movement trajectory.

There are continuous desires for reductions of size, and/or for reductions of costs of manufacturing and/or materials.

In view of one or more of such desires, herewith is provided a roof assembly according to the following.

The roof assembly comprises
a first bracket, in particular a closure member bracket for supporting a closure member,
a second bracket, in particular a support bracket,
the first and second brackets for mounting a closure member to a roof of the vehicle, and
a screw fastener screwable or screwed to the second bracket through an opening in a fastening portion of the first bracket to fasten the first bracket to the second bracket,
wherein the screw fastener has, along a length, a head and a shank separated by a shaft, the shaft has a shaft outer diameter being smaller than a major diameter of the shank, and a shaft length being larger than a thickness of the fastening portion.

The first bracket may be a closure member bracket and may be mounted, in particular fixed, to the closure member, facilitating mounting the closure member to the second bracket. The second bracket may be a support bracket and may be mounted to the roof of a vehicle. In particular, the support bracket may be mounted to an opening mechanism for moving the closure member relative to the roof of the vehicle, e.g. a sliding mechanism, or be mounted to a fixed mounting frame, e.g. for a fixed panel roof system. The first bracket and second bracket may thus provide an interface for mounting the closure member to the vehicle and/or the mechanism.

The first bracket may be mounted to the closure member within a first tolerance. The second bracket may be mounted to a mechanism and/or other part of the vehicle roof within a second tolerance. The closure member may need to be mounted to the mechanism and/or other part of the vehicle roof within a third tolerance. Thus, the first bracket and second bracket may need a mounting tolerance for attachment to each other to meet the third tolerance.

The assembly may have, when the screw fastener is screwed to the first bracket through the opening to fasten the first bracket to the second bracket, a moveably fastened configuration and a fixed configuration. In the moveably fastened configuration, the position and/or orientation of the first bracket relative to the second bracket may be adjusted as determined by play between the opening and the shaft. The shaft having a smaller diameter than the shank major diameter provides for increased play relative to a fastening size determined by the shank. Also or alternatively, the fastening portion may be reduced in size for a given amount of play about the fastener. In a desired relative position and/or orientation, the first bracket and the second bracket may be fixed together by tightening the fastener to the second bracket, clamping the first bracket between the second bracket on one side, and the head of the fastener on an opposite side.

Due to the diametric size difference between the shaft and the shank, a large screwing force may be provided combined with enlarged adjustment flexibility.

Preferably, the shaft has a substantially constant diametric size and is substantially smooth, e.g. being devoid of screw threads, ribs, and/or other relief.

Herein "screw fastener", or: "fastener" for short, refers to any type of threaded fastener as specified, e.g. the shank forming a sharp-tipped screw end, a blunt-tipped screw end, a bolt end, etc. Preferably the screw fastener is configured for forming a screw thread in a cooperating part operably receiving the screw fastener.

The shank forms a screw-threaded portion, to attach and/or fix the first bracket and second bracket by a screwed connection e.g. screwing the fastener into the second bracket and/or fixing a nut to the fastener opposite the head.

The shank of the fastener may pass through the opening in thickness direction of the fastening portion to fasten the first bracket to the second bracket.

The shaft outer diameter may be between the major diameter and minor diameter of the shank.

The fastener may be provided, at least when attached to the second member, with a washer between the head and the shank. Then, the shaft length may be larger than a sum of the thickness of the fastening portion and a thickness of the washer. Thus, the fastener extending through the washer, the fastening portion may be clamped between the second bracket on one side and the head of the fastener on an opposite side with the washer between the first bracket and the head, for attachment and/or fixation of the closure member bracket to the support bracket.

The washer is rotatable about the fastener. The washer may have a washer opening receiving the fastener. The washer opening may have an inner diameter smaller than the major diameter of the shank, preventing loss of the washer from the fastener.

Screws onto which a washer is clamped between the screw's head and its thread section to prevent loss are known. Then the thread is usually rolled against the washer, to define the washer's position reliably and maximize the thread length.

The washer may have a distal face for clampingly engaging, in assembled configuration of the assembly, the first bracket, provided with one or more protrusions extending distally from the distal face. The protrusions may assist defining a friction force between the washer and the first bracket which may assist preventing loosening of the washer and/or of the fastener after fixation. Then, the shaft length may be larger than a sum of the thickness of the fastening portion and a thickness of the washer including the one or more protrusions.

The opening in the fastening portion may be circular, or rectangular (including square) and/or be elongated. The opening may have a slotted shape in a longitudinal direction. The longitudinal direction of the opening may be substantially perpendicular or parallel to a longitudinal extension of the second bracket and/or may be vertical or horizontal in a normally mounted state in a vehicle.

The opening may be an encircled hole; the opening being encircled by fastening portion material. The washer and/or the head of the fastener may have an outer diameter larger than an open width of the opening, preferably being larger than any open width of the opening so as to enable covering the opening fully and engaging the fastening portion around the opening.

The second bracket may comprise a hole for operably receiving, and cooperating with, the shank. The hole may be provided with a thread portion providing a thread length. The shank may have a shank length equal to or larger than the thread length.

The thread portion may be recessed behind a mounting surface of the second bracket for engaging the first bracket by a recess depth. Then, the shaft length may be larger than a sum of the thickness of the fastening portion and the recess depth, preferably larger by an amount equal to or larger than a thickness of the washer, optionally including the oner or more protrusions if applicable.

The screw fastener, in particular in the roof assembly, may comprise a distal tip protruding distally from the shank having a tip outer diameter equal to or smaller than the shank, possibly equal to or smaller than the outer diameter of the shaft. Thus, the fastener may be self centering on insertion into a hole. The shank may have on a distal end a distal slope toward the tip at a smaller angle than a screw thread flank angle.

A screw thread of a screw-threaded shank may have a pitch. Then, the shank length may be longer than the thread length of the above-referenced hole in the second bracket in a range of 0,5 to 2,5 times the pitch, preferably 0,5-1,5 times, more preferably 0,75-1,25 times the pitch. Thus, the fastener may be screwed into (the threaded portion of) the threaded hole to different depths wat constant operable interaction length between the fastener and the support bracket.

Also or alternatively then, the distal tip may have a tip length in range of 0,5 to 6,0 times the pitch, preferably 1,0-5,0 times, more preferably 2,0-4,0 times the pitch.

Also or alternatively then, the shaft may have a shaft length of 1,0-4,0 times the pitch, preferably 1,5-3,0 times, more preferably 2,0-2,5 times the pitch.

Also or alternatively, the shank may have a minor diameter and the shaft may have a shaft diameter of 0,5-2,0 times the minor diameter, preferably 0,8-1,5 times, more preferably 1,1-1,2 times the minor diameter.

The shaft length and/or shaft diameter may facilitate designing and/or scaling sizes with predetermined strength relationships. The shaft and shank may be provided by profiling one or more portions of the fastener e.g. by removing a portion of the shank to form the shaft. Also or alternatively, the shaft diameter may be associated with forming the shank; e.g. the shank minor and/or major diameter being determined by deforming a first portion of a rod section of the fastener and the shaft being provided by a differently deformed or, preferably, undeformed second portion of the rod section; the head of the fastener being provided on the rod section. E.g. a screw thread may be rolled onto the first portion of the rod section leaving a second portion substantially undeformed to provide the shaft. For a fastener of a given length from a distal end of the head to a distal end of the shank (and to a tip if provided, see elsewhere herein), manufacturing costs may be reduced by an increase of shaft length and associated reduction of shank length. The optional washer may be provided on the shaft portion (or rather: shaft portion-to-be), e.g. the second rod section, prior to forming the shank. Thus, that the washer becomes captured onto the fastener preventing loss of the washer.

The roof assembly may comprise a closure member fixed to the first bracket. Also or alternatively, the second bracket may be operably mounted to a mechanism for moving the first bracket, and any closure member attached to the latter, relative to the roof. Or, the second bracket may be fixedly mounted to a support frame for fixating the first bracket. The closure member may be or comprise an opaque or an at least partly translucent panel, possibly at least partly transparent.

A vehicle may comprise any embodiment of the roof assembly disclosed herein.

Herein further is disclosed a mounting assembly for a roof assembly disclosed herein, comprising a closure member bracket for supporting a closure member, a screw fastener screwable to a support bracket through an opening in a fastening portion of the closure member bracket to closure member bracket to the support bracket, and a the screw fastener having, along a length, a head and a shank separated by a shaft, the shaft has a shaft outer diameter being smaller than a major diameter of the shank, and a shaft length being larger than a thickness of the fastening portion.

A screw fastener as specified herein, for use in a roof assembly for a vehicle disclosed herein, and having, along a length, a head and a shank separated by a shaft, the shaft having a shaft outer diameter being smaller than a major diameter of the shank, and a shaft length being larger than a thickness of a fastening portion, allows reducing sizes and/or costs of the roof assembly.

The shank length may facilitate reliably attaching the fastener to the second bracket in an intermediate stage for attaching the first bracket to the second bracket and allowing adjustment of their relative position and/or orientation, and subsequent fixation of the second bracket to the first bracket by further fastening the fastener. The washer, if present, may facilitate fixation.

Associated with the preceding, a method of assembling a roof assembly disclosed herein, may comprise:
fastening a first bracket to a second bracket by screwing a screw fastener to the second bracket through an opening in a fastening portion of the first bracket to fasten the first bracket to the second bracket, to a moveably fastened configuration, wherein the position and/or orientation of the first bracket relative to the second bracket are adjustable as determined by play between the opening and the shank, and
in a desired relative position and/or orientation, fixing the first bracket and the second bracket together by tightening the fastener to the second bracket, clamping the first bracket between the second bracket on one side, and the head of the fastener on an opposite side.

Further, a method of adjusting a closure member of a roof assembly for a vehicle as specified herein may comprise adjusting the first bracket with respect to the second bracket while the opening of the fastening portion is arranged around a shaft portion of the screw fastener.

E.g. such method may comprise arranging the fastener in the second bracket such that the fastening portion of the first bracket is arranged around the shaft of the fastener, and adjusting the first bracket with respect to the second bracket while the fastener is in the arranged position.

The above-described aspects will hereafter be more explained with further details and benefits with reference to the drawings showing a number of embodiments by way of example.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
Fig. 1A shows a perspective view of a vehicle roof with an open roof assembly;
Fig. 1B shows an exploded view of the open roof assembly of Fig. 1A;
Fig. 2 shows a closure member provided with a closure member bracket;
Fig. 3 shows a partial cross section of a roof assembly;
Fig. 4 shows a schematic detail of Fig. 3.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

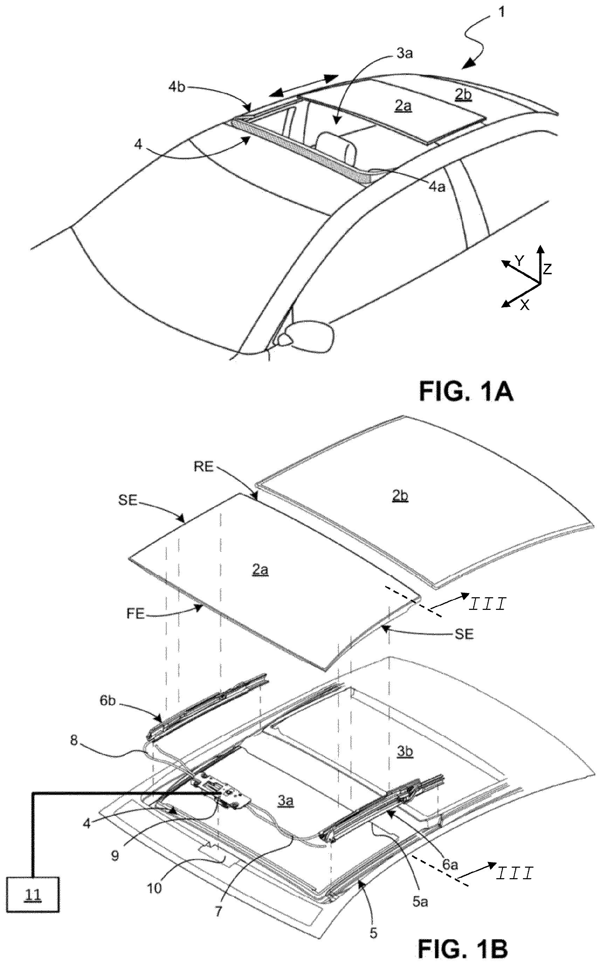

Fig. 1 illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed. In the open position, for example both the rear end RE and front end FE may be raised as compared to the closed position.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior space through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, E.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts airflow when the moveable panel 2a is in the open position. In its raised position, the wind deflector 4 reduces inconvenient noise due to airflow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b extend in the longitudinal direction L, are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a drive motor 9.

The drive cables 7, 8 couple the drive motor 9 to the mechanisms of the respective guide assemblies 6a, 6b such that upon operating the drive motor 9, the mechanisms start to move. In particular, a core of the drive cable 7, 8 is moved by the drive motor 9 such to push or pull on the mechanisms of the respective guides 6a, 6b. Such a drive assembly is well known in the art and Is therefore not further elucidated herein. Still, any other suitable drive assembly may be employed as well without departing from the scope of the present invention. Moreover, in a particular embodiment, a drive motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the drive motor 9 is mounted near or below the front end FE of the moveable panel 2a at a recess 10. In another embodiment, the drive motor 9 may be positioned at any other suitable position or location. For example, the drive motor 9 may be arranged near or below the rear end RE of the moveable panel 2a or below the fixed panel 2b.

A control unit 11 is schematically illustrated and is operatively coupled to the drive motor 9. The control unit 11 may be any kind of processing unit, either a software controlled processing unit or a dedicated processing unit, like an ASIC, as well known to those skilled in the art. The control unit 11 may be a stand-alone control unit or it may be operatively connected to another control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 9 and thus the moveable roof assembly.

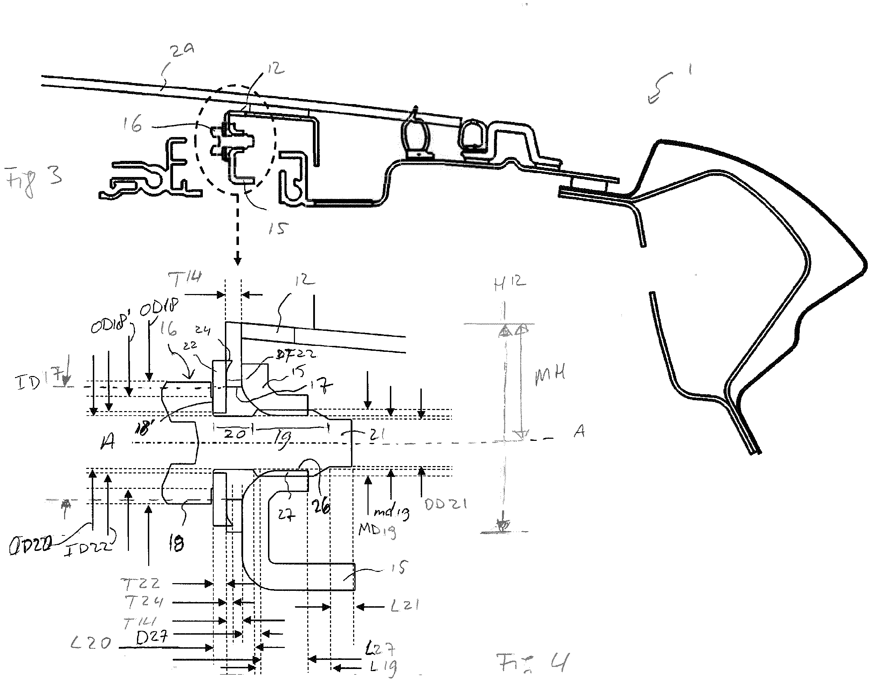

In Fig. 1B a cross section plane for Figs. 3 and 4 is indicated.

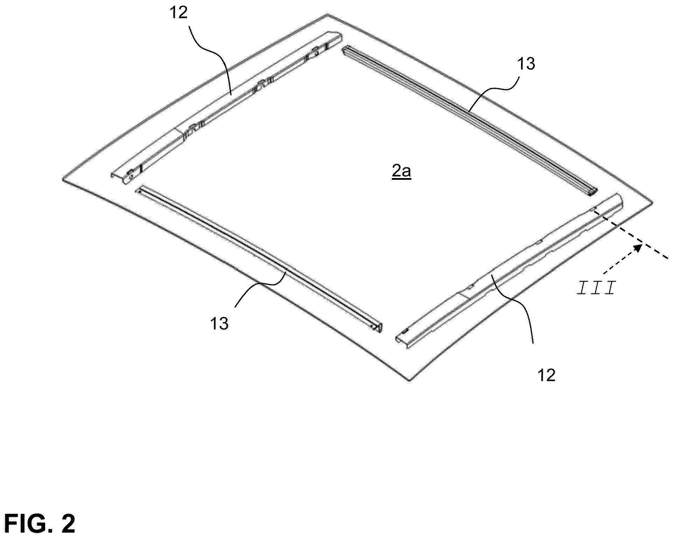

Fig. 2 shows the moveable panel 2a as an exemplary closure member. The panel 2a is provided with two closure member brackets 12 on opposite lateral sides. The panel 2a is also provided with optional seals 13.

Figs. 3 and 4 show parts of a roof assembly R for the vehicle comprising the closure member bracket 12 supporting the panel 2a as a closure member. The closure member bracket 12 is fastened, at fastening portion 14 to a support bracket 15, in turn provided on the guide assembly 6 (not shown). Hence, the panel 2a is mounted to the vehicle roof.

The closure member bracket 12 and support bracket 15 are fastened together by a screw fastener 16 screwed to the support bracket 15 through an opening 17 with inner diameter 17 in a fastening portion 14 of the closure member bracket 12 to fasten the brackets 12, 15 together. At least part of the closure member bracket 12 may be formed as an extruded profile member and/or may be formed from a (preferably metal) strip.

The closure member bracket 12 has a height H12 in a cross section plane at a center of the opening 17 (Figs. 3, 4).

The screw fastener 16 extends along an axis A and has, along an axial length, a head 18 and a shank 19 separated by a shaft 20, and a distal tip 21 at a distal end from the shank 19, the head 18 providing a proximal end. Further directional indications are made with reference to the axis A.

The shank 19 has a shank length L19 and is provided with a screw thread (partly indicated in Fig. 5) providing a major diameter MD19, a minor diameter md19, and a pitch P19.

The shaft 20 has a shaft length L20 and a shaft outer diameter OD20.

The distal tip 21 has a tip length L21 and a tip outer diameter OD21.

The head 18 has a head outer diameter OD18. The head 18 may be formed in any suitable manner for operable instrument connection, e.g. formed as a slit head, Philips head, hexagon head, or socket head as shown. The head 18 may be provided with a flange radially protruding from the head 18 (not shown) and/or with a washer collar 18' (shown) at a smaller collar diameter OD18' which may assist increasing fastening pressure and/or reducing rotary friction compared to a flat distal side of the head 18 of head outer diameter OD18.

The shank 19, possibly the fastener as a whole, may adhere to any suitable standard, preferably the ISO metric screw thread standard (M-series threads, preferably coarse type thereof), e.g. an M4 or M5 screw thread; e.g. an M5 thread having a pitch of 0,8 mm.

The screw fastener 16 is provided with a washer 22. The washer 22 has a washer outer diameter OD22, and is provided with a washer opening 23 having an inner diameter ID23. The washer 22 has a thickness T22. The inner diameter ID22 is larger than the shaft outer diameter OD20 but smaller than the shank major diameter MD19; the washer 22 is freely moveable about, but locked to, the shaft 20.

The washer 22 is provided with one or more optional protrusions 24, e.g. arranged around the opening and/or arranged along an outer circumference, as indicated. The protrusions 24 extend distally from a distal face DF22 of the washer 22 for a protrusion thickness T24.

The fastening portion 14 of the closure member bracket 12 has a thickness T14 and is provided with an opening 25 having an inner diameter IN25. The closure bracket thickness T14 may be in a range of 0,8-1,5 mm, preferably in a range of 1,0-1,4 mm such as in a range of 1,2-1,3 mm.

The support bracket 15 is provided with a hole 26 for operably receiving, and cooperating with, the shank 19. The hole 26 is provided with a thread portion 27 having a thread length L27, recessed by a recess distance D27 behind a mounting surface 28 of the support bracket 15 for engaging the closure member bracket 12. The recess is optionally chamfered providing a lead-in for the fastener; this, and/or the distal tip 21 of the fastener 16 facilitate aligning the fastener to the hole and therewith facilitating assembling the assembly R. The thread portion 27 may be provided at least in part in the hole 26 during manufacturing of the support bracket 15, and/or be at least in part formed by (at least part of the shank 19 of) the fastener during screwing (the shank 19 of) the fastener 16 into the hole 26.

As may be seen, the shaft outer diameter OD22 is smaller than the major diameter MD19 of the shank 19.

The shaft length L20 is larger than a thickness T14 of the fastening portion 14. Here, the shaft length L20 amounts to the sum of the washer thickness T22 plus the protrusion thickness T24 (not indicated) plus one times the shank screw thread pitch P19. In the shown embodiment, the recessed distance D27 of the screw thread portion 27 in the hole 26 is comparable to one time the pitch P19, but may be larger or smaller than that.

Fig. 4 shows the fixed configuration wherein the screw fastener is tightened to the support bracket, clamping (the fastening portion of) the closure member bracket 12 between the fastener head 18 and washer 22 on one side and the support bracket 15 on an opposite side. Dependent on the tightening force, the protrusions 24 and/or the fastening portion 14 may be deformed more or less to increase fixation.

The closure member 12 extends for a mounting height MH above the centre of the hole 26 and the associated axis of the screw fastener 16.

When the screw fastener would be screwed into the support bracket 15 without tightening, providing an intermediate configuration, a position of the closure member bracket 12 may be adjusted relative to the support bracket 15 as determined by play between (the opening 17 in) the closure member bracket 12 and the shaft 20 of the screw fastener 16. For multiple such attachments, orientation of the closure member 2a relative to the vehicle roof 1 and/or the guide 6 may be adjusted. A small shaft outer diameter OD20 relative to the shank major diameter MD19 provides for travel of the closure member bracket 12 about the fastener 16 upon sufficient insertion into the support bracket whereas the opening 16 need only accommodate passage of the shank 19 through it. The diameter of the opening 16 may relate to a minimum size of the fastening portion 14 and hence of the closure member bracket 12 as a whole. The washer outer diameter OD22 and/or washer thickness T22 may be related to the size of the opening 16, e.g. for one or more of covering a desired amount of the opening 16 in particular the washer 22 covering the opening 16 in full as shown, providing a predetermined strength, resisting bending under a predetermined clamping force etc.

The disclosure is not restricted to the above-described embodiments which can be varied in a number of ways within the scope of the claims.

For instance the closure member bracket and fastener assembly may also be used to mount a fixed, non-movable panel, such as panel 2b in Fig. 1Bb, to a rear support bracket.

Elements and aspects discussed for or in relation with a particular embodiment may be suitably combined with elements and aspects of other embodiments, in particular the subject matter of any and all appended claims may be suitably combined, unless explicitly stated otherwise.

## Claims

1. Roof assembly for a vehicle comprising
a first bracket, in particular a closure member bracket for supporting a closure member,
a second bracket, in particular a support bracket,
the first and second brackets for mounting a closure member to a roof of the vehicle, and
a screw fastener screwable or screwed to the second bracket through an opening in a fastening portion of the first bracket to fasten the first bracket to the second bracket,
wherein the screw fastener has, along a length, a head and a shank separated by a shaft, the shaft has a shaft outer diameter being smaller than a major diameter of the shank, and a shaft length being larger than a thickness of the fastening portion.

2. The roof assembly according to claim 1, wherein the opening has an inner diameter larger than the major diameter of the shank.

3. The roof assembly according to any of the preceding claims, wherein the fastener is provided, at least when attached to the support member, with a washer between the head and the shank, preferably the washer having a washer opening receiving the fastener and having an inner diameter smaller than the major diameter of the shank, and
wherein the shaft length is larger than a sum of the thickness of the fastening portion and a thickness of the washer.

4. The roof assembly according to claim 3, wherein the washer is provided with one or more protrusions extending distally from a distal face, wherein the shaft length is larger than a sum of the thickness of the fastening portion and a thickness of the washer including the one or more protrusions.

5. The roof assembly according to any of the preceding claims, wherein the second bracket comprises a hole for operably receiving, and cooperating with, the shank, the hole being provided with a thread portion having a thread length, wherein the shank has a length equal to or larger than the thread length.

6. The roof assembly according to claim 5, wherein thread portion is recessed by a recess depth behind a mounting surface of the second bracket for engaging the first bracket,
wherein the shaft length is larger than a sum of the thickness of the fastening portion and the recess depth, and possibly, in case of an assembly according to claim 3 or 4, a thickness of the washer, optionally including the one or more protrusions when applicable.

7. The roof assembly according to any of the preceding claims, wherein the fastener comprises a distal tip protruding distally from the shank having an outer diameter equal to or smaller than the major diameter of the shank.

8. The roof assembly according to any one of claims 5-7,
wherein the shank has a minor diameter and the shaft has a shaft diameter of 0,5-2,0 times the minor diameter, preferably 0,8-1,5 times, more preferably 1,1-1,2 times the minor diameter; and/or
wherein the shank has a pitch, and wherein
the shank length is longer than the thread length in a range of 0,5-2,5 times the pitch, preferably 0,5-1,5 times, more preferably 0,75-1,25 times the pitch, and/or
the shaft has a shaft length in a range of 1,0-4,0 times the pitch, preferably 1,5-3,0 times, more preferably 2,0-2,5 times the pitch; and/or
in a roof assembly according to claim 7, the distal tip has a tip length in range of 0,5-6,0 times the pitch, preferably 1,0-5,0 times, more preferably 2,0-4,0 times the pitch.

9. The roof assembly according to any of the preceding claims, wherein the opening has a slotted shape in a longitudinal direction, wherein preferably the longitudinal direction of the opening is substantially vertical.

10. The roof assembly according to any of the preceding claims, comprising a closure member, in particular a panel fixed to the first bracket, and/or
wherein
the second bracket is operably mounted to a mechanism for moving the first bracket, and any closure member attached to the latter, relative to the roof, or
the second bracket is fixedly mounted to a support frame for fixating the first bracket.

11. Vehicle comprising the roof assembly according to any of the preceding claims

12. A mounting assembly for a roof assembly according to any of claims 1-10, comprising a closure member bracket for supporting a closure member, and
a screw fastener screwable to a support bracket through an opening in a fastening portion of the closure member bracket to closure member bracket to the support bracket, the screw fastener having, along a length, a head and a shank separated by a shaft, the shaft has a shaft outer diameter being smaller than a major diameter of the shank, and a shaft length being larger than a thickness of the fastening portion.

13. A screw fastener having, along a length, a head and a screw threaded shank separated by a shaft, the shaft has a shaft outer diameter being smaller than a major diameter of the shank, and a shaft length being larger than a thickness of the fastening portion,
wherein the shank has a minor diameter and the shaft has a shaft diameter of 0,5-2,0 times the minor diameter, preferably 0,8-1,5 times, more preferably 1,1-1,2 times the minor diameter; and/or
wherein the shank has a pitch, and
wherein the shank length is longer than the threaded length in range of 0,5 to 2,5 times the pitch, preferably 0,5-1,5 times, more preferably 0,75-1,25 times the pitch, and/or
the shaft has a shaft length in a range of 1,0-4,0 times the pitch, preferably 1,5-3,0 times, more preferably 2,0-2,5 times the pitch; and/or
and/or
wherein the fastener comprises a distal tip protruding distally from the shank having an outer diameter equal to or smaller than the major diameter of the shank, the distal tip having a tip length in range of 0,5 to 6,0 times the pitch, preferably 1,0-5,0 times, more preferably 2,0-4,0 times the pitch.

14. Method of assembling a roof assembly according to any one of claims 1-10, comprising
fastening a first bracket to a second bracket by screwing the screw fastener to the first bracket through an opening in a fastening portion of the second bracket to fasten the first bracket to the second bracket, to a moveably fastened configuration, wherein the position and/or orientation of the first bracket relative to the second bracket are adjustable as determined by play between the opening and the shank, and
in a desired relative position and/or orientation, fixing the first bracket and the second bracket together by tightening the fastener to the second bracket, clamping the first bracket between the second bracket on one side, and the head of the fastener on an opposite side.

15. A method for adjusting a roof assembly for a vehicle according to claim any of the claims 1-10, comprising
adjusting the closure bracket with respect to a support bracket while the opening of the fastening portion is arranged around a shaft portion of the screw fastener.
